# EUROPEAN PATENT SPECIFICATION

(11) **EP 2 085 649 B1**
(45) Date of publication and mention of the grant of the patent: **22.02.2012**
(21) Application number: 08001593.6
(22) Date of filing: 29.01.2008
(51) Int. Cl.: F16C 19/54, F16C 35/067, F16H 57/02

(54) **Bearing assembly for an output shaft of an automatic transmission**
Lageranordnung für eine Ausgangwelle in einem Automatikgetriebe
Montage à roulement pour un arbre de sortie d'une transmission automatique

(43) Date of publication of application: 05.08.2009
(73) Proprietor: GM Global Technology Operations LLC, Detroit, MI 48265-3000 (US)
(72) Inventor: Blin, Thierry, 67100 Strasbourg (FR)
(74) Representative: Strauss, Peter

(56) References cited:
- BE-A- 353 492
- JP-A- 2003 254 412
- US-A- 1 381 178
- US-A- 5 051 693
- US-A- 5 685 650
- US-A- 5 980 116

## Description

The invention concerns an automatic transmission with a main case including a guidance for an output shaft, the guidance comprising at least one bearing.

Such an automatic transmission is known from the document DE 11 2004 000 653 T5.

The document EP 1 643 160 A2 is concerned with the mounting of a transmission comprising an output shaft and at least one bearing in a case. The bearing is configured to position axially the output shaft during the mounting of the transmission.

The document BE 353 492 A discloses a transmission, wherein a spacer is fixed between an output shaft of the transmission and a bearing.

The current design of automatic transmissions does not include any shoulder for retaining the bearing. This design was chosen because its absence facilitates the rear machining and because of the bearing lifetime. A shoulder would reduce the distance between two bearings which would decrease the bearing lifetime.

However, due to the unbalance of the output shaft it may occur at high speed levels that the bearing moves out of its location, thereby pushing the lip seal outside. This leads to transmission leakage and occurrence of important vibration noise.

The object of the invention is to make sure that the bearings do not move out of their location without reducing the distance between the bearings.

According to the invention, a spacer is fixed between the bearings and the diameter of the bearings decreases with increasing distance from the spacer.

The invention is based on the understanding that the unbalance level of the output shaft at high speed makes the bearings move in the longitudinal direction even if the bearings are press fit inside the bore. The spacer serves as a stop for the bearings. The design of the bearings was modified in order to make them move always towards the stop. As the outer diameter of the bearings decreases from the side which is adjacent to the spacer to the opposite site, the bearings move always towards the stop. This solution is neither complex nor expensive.

In a preferred embodiment of the invention, the spacer is press fit inside the bore.

This can be easily realized during the mounting of the transmission.

According to the present invention, the spacer is made of aluminium.

Aluminium is very well adapted as spacer material because this assures a good press fit strength over a wide range of temperature.

In the following, the invention is described in detail with reference to the drawings in which
FIGURE 1 shows the current design of the output of an automatic transmission,
FIGURE 2 shows the bearings for the output shaft in an automatic transmission according to the invention.

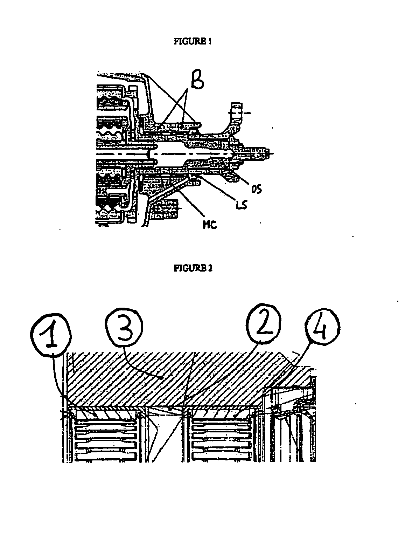

FIGURE 1 (prior art) shows the output shaft (OS) of an automatic transmission which extends through an opening in the main case (MC). The guidance of the output shaft (OS) is done by two bearings (B) pressed in the main case (MC). A lip seal (LS) closes the lateral opening in which the bearings (B) are placed.

FIGURE 2 shows two bearings 1, 4 for the guidance of the output shaft of an automatic transmission. Between the bearings 1, 4, a spacer 2 is press fit inside the bore 3. The purpose of this spacer 2 is to create a positive stop for the bearings 1, 4. The spacer 2 is made of aluminum in order to avoid a significant loss of press fit strength at varying temperatures.

In order to bloc the bearings 1, 4 against the spacer 2, the bearings 1, 4 have been configured as follows in order to always move towards the spacer 2.

The outer diameter of the bearings 1, 4 decreases with increasing distance from the spacer 2. With other words, the bigger outer diameter of the bearings 1, 4 is located on the side of the spacer. Thus, the tapered outer diameter of the bearings makes them move always towards the spacer 2 which itself is press fit inside the bore 3.

This allows to keep the case design and the distance between the bearings 1, 4, the last fact assuring that the lifetime of the bearings 1, 4 is not reduced.

## Claims

1. Automatic transmission with a main case including a guidance for an output shaft, the guidance comprising two bearings (1, 4), **characterized in that** a spacer (2) is fixed between the bearings (1, 4) and the outer diameter of the bearings (1, 4) decreases with increasing distance from the spacer.

2. Automatic transmission according to claim 1, **characterized in that** the spacer (2) is press fit inside a bore (3).

3. Automatic transmission of claim 2, **characterized in that** the spacer (2) is made of aluminium.

## Patentansprüche

1. Automatikgetriebe mit einem Hauptgehäuse, das eine Führung für eine Abtriebswelle umfasst, wobei die Führung zwei Lager (1, 4) umfasst, **dadurch gekennzeichnet, dass** zwischen den Lagern (1, 4) ein Abstandselement (2) befestigt ist und der Außendurchmesser der Lager (1, 4) mit zunehmendem Abstand vom Abstandselement abnimmt.

2. Automatikgetriebe gemäß Anspruch 1, **dadurch gekennzeichnet, dass** das Abstandselement (2) in eine Bohrung (3) eingepresst wird.

3. Automatikgetriebe gemäß Anspruch 2, **dadurch gekennzeichnet, dass** das Abstandselement (2) aus Aluminium gefertigt ist.

## Revendications

1. Transmission automatique avec un carter principal comprenant un guidage pour un arbre de sortie, lequel guidage comprend deux paliers (1, 4), **caractérisée en ce qu'**un élément d'écartement (2) est fixé entre les paliers (1, 4) et le diamètre extérieur des paliers (1, 4) diminue en s'éloignant de l'élément d'écartement.

2. Transmission automatique selon la revendication 1, **caractérisée en ce que** l'élément d'écartement (2) est calé à la presse dans un alésage (3).

3. Transmission automatique selon la revendication 2, **caractérisée en ce que** l'élément d'écartement (2) est fait d'aluminium.
